Europäisches Patentamt

European Patent Office

Office européen des brevets

(11) Publication number: **0 039 540**
**B1**

# (12) EUROPEAN PATENT SPECIFICATION

(45) Date of publication of patent specification: **21.09.83**

(51) Int. Cl.³: **F 16 D 35/00, F 01 P 7/04**

(21) Application number: **81301369.5**

(22) Date of filing: **30.03.81**

(54) Improvements in and relating to viscous fluid coupling devices.

(30) Priority: **03.05.80 GB 8014904**

(43) Date of publication of application:
**11.11.81 Bulletin 81/45**

(45) Publication of the grant of the patent:
**21.09.83 Bulletin 83/38**

(84) Designated Contracting States:
**DE FR GB IT SE**

(56) References cited:
**EP - A - 0 008 889**
**GB - A - 1 029 364**
**US - A - 4 103 765**

(73) Proprietor: **HOLSET ENGINEERING COMPANY LIMITED**
**P.O. Box A9**
**Turnbridge Huddersfield, HD1 6RD (GB)**

(72) Inventor: **Ellis, Norman**
**6 Westmoor View Honley**
**Huddersfield West Yorkshire (GB)**

(74) Representative: **Huntingford, David Ian et al,**
**W.P. THOMPSON & CO. Coopers Building Church Street**
**Liverpool L1 3AB (GB)**

Courier Press, Leamington Spa, England.

## Improvements in and relating to viscous fluid coupling devices

The present invention relates to torque transmitting viscous shear couplings and in particular to such couplings which utilise a valve mechanism for controlling the flow of fluid within the coupling, the valve mechanism being operated by a temperature sensitive bimetal coil mounted externally of the drive.

Such couplings are well known and their construction and operation have been described in numerous patents typical of which are British Patents 898,442 and 1,540,708. A major problem with such couplings is associated with retention of the bi-metal coil and the need to eliminate fretting and wear of the bi-metal attachment means and of the valve shaft utilised for transmitting rotational movement from the bi-metal coil to an internally located rotary valve member.

The fretting and wear of the outer end of the bi-metal coil and the valve shaft are the result of vibrations transmitted to the drive when operating in its normal environment on an internal combustion engine. The vibration can be particularly severe when the coupling is mounted on the front of a four cylinder vehicle engine.

Various methods have been employed previously for attaching the outer end of the bi-metal coil to the coupling driven member including rigid fixing methods such as staking or welding, resilient methods which provide some degree of angular or angular and radial freedom to the outer end of the bi-metal coil by inserting rubber or rubber-like sealant/adhesive compounds between the outer end of the bi-metal coil and its locating means on the coupling driven member and by attachment means which permit the outer end of the bi-metal coil to slide freely in the radial direction.

The various attachment means employed previously have had various degrees of succees in reducing the problems associated with the outer end of the bi-metal coil but have not been totally successful in eliminating wear of the valve shaft.

It is an object of the present invention to provide an improved means for mounting the temperature sensitive bi-metal coil and valve shaft in a coupling of the type described which substantially eliminates the wear, fretting and breakage problems associated with previous couplings.

According to the present invention there is provided a fluid coupling containing a working fluid and including a rotatable driving member, at least a part of which is mounted for co-axial rotation within a working chamber forming part of a rotatable driven member, fluid shear spaces defined by opposing faces of the driving member and the working chamber, a valve plate mounted within the driven member for rotation therewith and dividing the driven member into the said working chamber and a fluid reservoir, a valve port in the valve plate, a rotary valve member operable to control the flow of working fluid between the fluid reservoir and the working chamber through said valve port, a valve shaft mounted co-axially with the driven member and extending through a bore in an external wall of the driven member adjacent to the reservoir, the end of the valve shaft within the reservoir being fixed to the rotary valve arm for rotation therewith, a temperature responsive bi-metal coil mounted externally of and co-axially with the driven member, said bi-metal coil including an inner end fixed for rotation with the valve shaft and an outer end resiliently fixed for rotation with the driven member, and valve shaft bearing means including a bracket member fixed to the exterior face of said external wall of the driven member for co-axial rotation therewith and a bearing member supported by said bracket which journals the external end of said valve shaft. Repeated radial displacement of the external end of the valve shaft, result from radial vibrations of the coils of the bi-metal coil is eliminated by the bearing means.

The bearing means is preferably a sleeve bearing which may be made from any suitable material e.g. steel backed bronze, a steel backed polymer (e.g. nylon or polytetrafluoroethylene), or a sintered bronze.

A convenient manner of achieving the resilient coupling between the coil and driven member, which permits angular flexibility between said outer end of the coil and the driven member, is to enclose the outer end of the coil in an elastomeric sleeve which is received in a correspondingly shaped recess in the driven member.

The invention will now be described, by way of example only, with reference to the accompanying drawings, in which:—

Figure 1 is a cross-sectional view of a fluid coupling device according to the present invention;

Figure 1a shows a detail of Fig. 1 to a larger scale;

Figure 2 is a front elevation of the coupling of Figure 1;

Figure 3 is a front elevation of the coupling of Figure 1 with the bearing bracket removed;

Figure 4 is a scrap view of one face of the working chamber in the direction of arrow A in Figure 1; and

Figure 5 is an end view of the housing in the direction A.

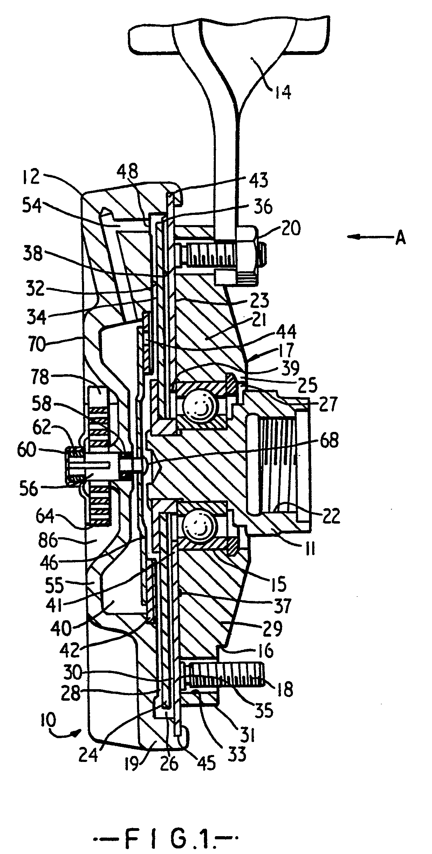

Referring now to the drawings, Figure 1 illustrates a torque transmitting viscous shear fluid coupling of the temperature responsive type generally designated 10 which contains a viscous working fluid (not shown) and includes a driving member 11 and a driven member 12, the driven member being journalled for co-axial rotation with the driving member by means of a bearing 15.

The driven member 12 includes a housing member generally designated 17 and a cover member 19. The housing member 17 comprises a sintered steel spider member 21 and an annular steel disc member 23 fixed for co-axial rotation therewith. The spider member has an annular centre boss 25 having a bore 27 dimensioned to receive the bearing 15 and a plurality of radially extending arms 29 formed integrally with the centre boss 25. Each radial arm 29 includes at its outer end a boss 31 having a bore 33. Formed by means of a step in each radial arm is a spigot location diameter 16 adapted to locate the fan or fan blades 14 or other driven device coaxially with the driving member 11. The fan or fan blades 14 is fixed by means of studs 18 and nuts 20 to the driven member 12. Preferably, the studs 18 are fixed to the annular disc member 23 at 35, for example by projection welding, each stud passing through a respective bore 33 in an arm 29 of the spider member 21. The annular disc member 23 and the spider member 21 may similarly be fixed to each other by projection welding through the arms as at 37. The bore 39 of the annular disc member 23 is preferably made smaller than the bore 27 of the spider member 21 thereby forming an abutment 41 for axial location of the driven member 12 against the bearing 15. The outer margin 43 of the annular disc member is attached to the cover member 19 at 45. The means of attachment may be by rolling an annular flange formed on the cover member over the outer margin of the annular disc member 23 as illustrated in Figure 1 but other means such as screws may also be used.

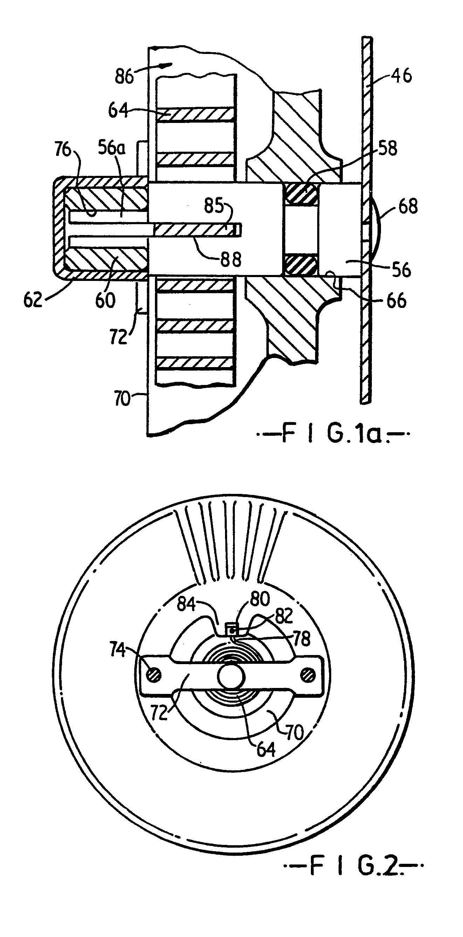

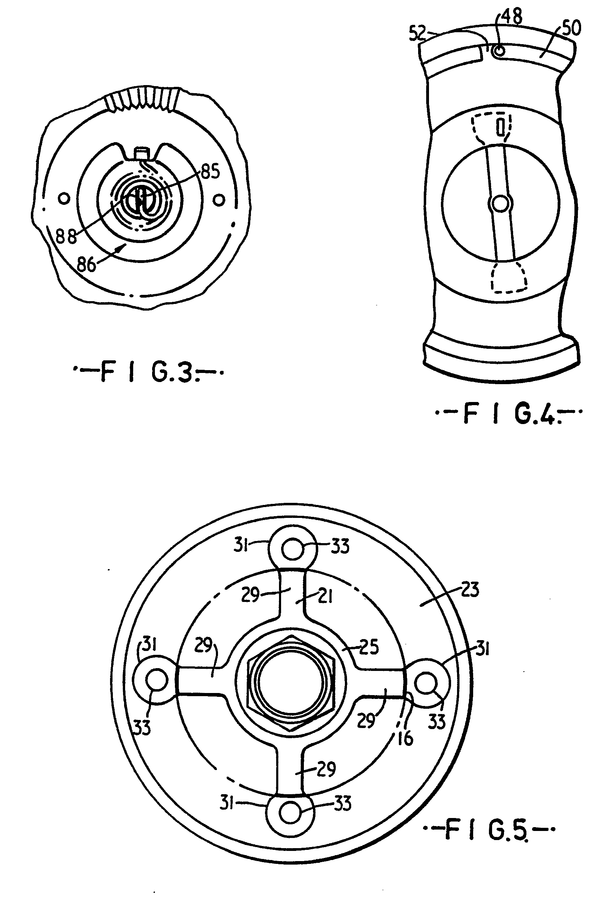

The driving member 11 includes a threaded bore 22 for connection to a source or rotational energy (not shown). A drive disc 24, which forms part of the driving member 11, is enclosed within a working chamber 26 formed as part of the driven member 12 and defining shear spaces 28 and 30 between the opposing faces 32, 34 and 36, 38 of the working chamber 26 and drive disc 24. The working chamber 26 is separated from a reservoir 40 by means of a valve plate 42 containing a valve port 44. A rotary valve member 46 is provided to open or close the valve port 44. Adjacent to the periphery of the drive disc 24 there is provided an outlet port 48 in the wall 32 of the working chamber connected by ducts 54 to the reservoir 40. The outlet port 48 is provided with a scoop member 52 (Fig. 4) formed by a blocked groove 50 formed in the face 32 of the working chamber 26. The wall 55 of the driven member defines the front wall of the reservoir and includes an aperture 66 (Fig. 1a) for locating a valve shaft 56. As shown, most clearly in Fig. 1a, the valve shaft is attached rigidly to the valve arm by rivetting or staking for rotation therewith at 68. A suitable seal 58 is provided to prevent leakage of fluid from the reservoir 40. A bracket member 72 (Fig. 2) is fixed to the front face 70 of the driven member by means of screws or other suitable fastening means such as rivets at 74. Formed in the centre of the bracket is a cup 62 adapted to receive a bearing 60 having a bore 76 for supporting and journalling the outboard end 56a of the valve shaft 56. Angular rotation of the valve member 46 to open or close the valve port 44 is controlled by a temperature responsive bi-metal coil 64 located in a recess 86 in the front wall of the coupling driven member 12. The bi-metal coil includes a first straight tang 78 which is fixed resiliently to the driven member by means of an elastomeric sleeve 82 fitted tightly over the tang 78, the combined tang and sleeve being an interference fit in a recess or slot 80 formed in a boss 84 within the recess 86. The slot 80 may be conveniently cast in the boss 84 as any casting draft angle can be readily accomodated by the elastomeric sleeve 82. The bi-metal coil further includes a second straight tang 85 (Fig. 1a and 3) which is fitted closely into a slot 88 in the valve shaft 56 to impart rotational movement thereto upon changes in temperature ambient to the bi-metal coil.

In operation, the driving member 11 is driven by means of an accessory drive shaft of an internal combustion engine, usually the water pump drive shaft, shear resistance of the viscous fluid in the working chamber 26 causing the driven member 12 to rotate at an r.p.m. that is somewhat lower than the r.p.m. of the driven member. By virtue of the difference in r.p.m. between the driving disc 24 and the driven member 12 viscous fluid is gathered by the scoop 52 and passes through ducts 54 into the reservoir 40. As long as the temperature externally of the coupling is above a predetermined limit the temperature responsive bi-metal coil 64 maintains the rotary valve member 46 in a position in which the valve port 44 remains open. Fluid from the reservoir 40 therefore passes through the valve port 44 into the working chamber 26 whereby sufficient fluid is maintained within the working spaces 28 and 30 to establish a maximum r.p.m. of the driven member. When the temperature externally of the coupling drops below a predetermined limit the temperature responsive bi-metal coil 64 moves the rotary valve member 46 into a position in which the valve port 44 is closed thereby preventing fluid flowing from the reservoir 40 to the working chamber 26. The scoop 52 however continues to pass fluid from the working chamber 26 thereby emptying the working chamber and shear spaces 28 and 30 of viscous fluid and hence reducing the degree of drive between the driving member 12 and driven member 11. The r.p.m. of the driven member then falls until it is substantially freewheeling around the driving member with very little drive being transmitted. When the temperature again rises the temperature responsive bi-metal coil 64 moves the valve member 46 into a position in which the valve port 44 is open thereby allowing fluid to pass from the reservoir 40 to the working chamber 26 and shear spaces 28, 30. The amount of fluid in the shear spaces 28, 30 gradually increases until the maximum drive condition is reestablished and the r.p.m. of the driven member rises to a maximum.

## Claims

1. A fluid coupling containing a working fluid and including a rotatable driving member (11), at least a part of which is mounted for co-axial rotation within a working chamber (26) forming part of a rotatable driven member (12), fluid shear spaces (28, 30) defined by opposing faces of the driving member (11) and the working chamber (26), a valve plate (42) mounted within the driven member (12) for rotation therewith and dividing the driven member (12) into the said working chamber (26) and a fluid reservoir (40), a valve port (44) in the valve plate (42), a rotary valve member (46) operable to control the flow of working fluid between the fluid reservoir (40) and the working chamber (26) through said valve port (44), a valve shaft (56) mounted co-axially with the driven member (12) and extending through a bore (66) in an external wall (55) of the driven member (12) adjacent to the reservoir (40), the end of the valve shaft (56) within the reservoir (40) being fixed to the rotary valve member (46) for rotation therewith, and a temperature responsive bimetal coil (64) mounted externally of and co-axially with the driven member (12), said bimetal coil (64) including an inner end (85) fixed for rotation with the valve shaft (56) and an outer end (78) resiliently fixed for rotation with the driven member (12), characterised by valve shaft bearing means including a bracket member (72) fixed to the exterior face (70) of said external wall (55) of the driven member (12) for co-axial rotation therewith and a bearing member (60) supported by said bracket (72) which journals the external end of said valve shaft (56).

2. A fluid coupling as claimed in claim 1 characterised in that the outer end (78) of the bimetal coil (64) is embraced by an elastomeric sleeve (82) which is received in a correspondingly shaped recess (80) in the driven member (12).

3. A fluid coupling as claimed in claim 2 characterised in that said outer end (78) comprises a straight tang over which said elastomeric sleeve (82) is fitted.

4. A fluid coupling as claimed in claim 3 characterised in that the combined tang (78) and sleeve (82) are an interference fit in the recess (80).

5. A fluid coupling as claimed in claim 2, 3 or 4 characterised in that the recess (80) is cast in a boss part (84) of the driven member (12).

6. A fluid coupling as claimed in any of claims 1 to 5 characterised in that the inner end (85) of the bimetal coil (64) comprises a straight tang which is received in a slot (88) in the valve shaft (56).

## Patentansprüche

1. Fluidkupplung, die ein Arbeitsfluid enthält und die folgende Bauteile aufweist: Ein drehbares antreibendes Glied (11), von dem wenigstens ein Teil für eine koaxiale Drehung innerhalb einer Arbeitskammer (26) angeordnet ist, die einen Teil eines drehbaren angetriebenen Gliedes (12) bildet, Fluid-Scherräume (28, 30), die zwischen einander zugekehrten Flächen des antreibenden Gliedes (11) und der Arbeitskammer (26) gebildet sind, eine Ventilplatte (42), die innerhalb des angetriebenen Gliedes (12) zur Drehung mit diesem angeordnet ist und die das angetriebene Glied (12) in die Arbeitskammer (26) und ein Fluid-Reservoir (40) unterteilt, eine Ventilöffnung (44) in der Ventilplatte (42), ein drehbares Ventilglied (46), das zur Steuerung der Strömung des Arbeitsfluids zwischen dem Fluid-Reservoir (40) und der Arbeitskammer (26) durch die Ventilöffnung (44) hindurch betätigbar ist, eine Ventilwelle (56) die koaxial mit dem angetriebenen Glied (12) angeordnet ist und sich durch eine Bohrung (66) in einer Außenwand (55) des angetriebenen Gliedes (12) benachbart zu dem Reservoir (40) erstreckt, wobei das Ende der Ventilwelle (56) innerhalb des Reservoirs (40) mit dem drehbaren Ventilglied (46) zur Drehung mit diesem verbunden ist, une eine temperaturabhängig arbeitende Bimetallspule (64), die außerhalb des angetriebenen Gliedes (12) und koaxial zu diesem angeordnet ist, wobei die Bimetallspule (64) ein inneres Ende (85) aufweist, das zur Drehung mit der Ventiwelle (56) verbunden ist, sowie ein äußeres Ende (78), das zur Drehung mit dem angetriebenen Glied (12) nachgiebig Verbunden ist, gekennzeichnet durch Lagermittel für die Ventilwelle, die ein Halteglied (72) aufweisen, das an der Außenfläche (70) der Außenwand (55) des angetriebenen Gliedes (12) zur koaxialen Drehung mit diesem befestigt ist, und die ferner ein durch das Halteglied (72) abgestütztes Lagerglied (60) aufweisen, das das äußere Ende Ventilwelle (56) drehbar lagert.

2. Fluidkupplung nach Anspruch 1, dadurch gekennzeichnet, daß das äußere Ende (78) der Bimetallspule (64) durch eine elastomere Hülse (82) umgriffen ist, die in einer entsprechend geformten Ausnehmung (80) in dem angetriebenen Glied (12) aufgenommen ist.

3. Fluidkupplung nach Anspruch 2, dadurch gekennzeichnet, daß das äußere Ende (78) eine gerade Zunge aufweist, über die die elastomere Hülse (82) paßt.

4. Fluidkupplung nach Anspruch 3, dadurch gekennzeichnet, daß die Kombination aus Zunge (78) und Hülse (82) einein Festsitz in der Ausnehmung (80) bildet.

5. Fluidkupplung nach Anspruch 2, 3 oder 4, dadurch gekennzeichnet, daß die Ausnehmung (80) in einem erhabenen Teil (84) des angetriebenen Gliedes (12) ausgebildet ist.

6. Fluidkupplung nach einem der Ansprüche 1 bis 5, dadurch gekennzeichnet, daß das innere Ende (85) der Bimetallspule (64) eine gerade Zunge aufweist, die in einem Schlitz (88) in der Ventilwelle (56) aufgenommen ist.

## Revendications

1. Accouplement fluidique contenant un fluide de travail et comportant un organe menant rotatif (11), dont au moins une partie est montée en rotation coaxiale à l'intérieur d'une chambre de travail (26) qui forme une partie d'un organe mené rotatif (12), des volumes de cisaillement de fluide (28, 30) délimités par des faces opposées de l'organe menant (11) et de la chambre de travail (26), un plateau de soupape (42) monté à l'intérieur de l'organe mené (12) de manière à être solidaire en rotation de ce dernier et divisant l'organe mené (12) de manière à délimiter ladite chambre de travail (27) et un réservoir de fluide (40), un orifice de soupape (44) ménagé dans le plateau de soupape (42), un obturateur de soupape rotatif (46) destiné à être actionné afin de commander l'écoulement de fluide de travail entre le réservoir de fluide (40) et la chambre de travail (26) par ledit orifice de soupape (44), un arbre de soupape (56) monté coaxialement à l'organe mené (12) et passant dans un perçage (66) ménagé dans une paroi externe (55) de l'organe mené (12), en position adjacente au réservoir (40), l'extrémité de l'arbre de soupape (56) qui est à l'intérieur de réservoir (40) étant fixée à l'obturateur de soupape rotatif (46) afin d'être solidaire en rotation de ce dernier, et une bobine bimétallique (64) sensible à la température, montée à l'extérieur de l'organe mené (12) coaxialement à ce dernier, ladite bobine bimétallique (64) comprenant une extrémité intérieure (85) solidaire en rotation de l'arbre de soupape (56) et une extrémité extérieure (78) fixée élastiquement en rotation à l'organe mené (12), caractérisé par des moyens formant palier pour l'arbre de soupape, qui comportent une applique (72) fixée à la face extérieure (70) de ladite paroi extérieure (55) de l'organe mené (12) afin d'être solidaire en rotation de ce dernier, et un palier (60) supporté par ladite applique (72) et dans lequel l'extrémité externe dudit arbre de soupape (56) est montée tourillonnant.

2. Accouplement fluidique tel que revendiqué dans la revendication 1, caractérisé en ce que l'extrémité extérieure (78) de la bobine bimétallique (64) est enserrée par un manchon un élastomère (82) qui est reçu dans un évidement de forme correspondante (80) ménagé dans l'organe mené (12).

3. Accouplement fluidique tel que revendique dans la revendication 2, caractérisé en ce que ladite extrémité extérieure (78) comprend une queue droite sur laquelle ledit manchon en élastomère (82) est monté.

4. Accouplement fluidique tel que revendique dans la revendication 3, caractérisé en ce que l'ensemble combiné constitué par la queue (78) et le manchon (82) sont montés à force dans l'évidement (80).

5. Accouplement fluidique tel que revendiqué dans les revendications 2, 3 ou 4, caractérisé en ce que l'évidement (80) est venu de moulage dans un bossage (84) de l'organe mené (12).

6. Accouplement fluidique tel que revendiqué dans l'une quelconque des revendications 1 à 5, caractérisé en ce que l'extrémité intérieure (85) de la bobine bimétallique (64) comprend une queue droite qui est reçue dans une fente (88) ménagée dans l'arbre de soupape (56).

—F I G.1.—

—F I G.1a.—

—F I G.2—

—F I G.3.—

—F I G.4.—

—F I G.5.—